Europäisches Patentamt

European Patent Office

Office européen des brevets

(11) Veröffentlichungsnummer: **0 429 150 A1**

(12) **EUROPÄISCHE PATENTANMELDUNG**

(21) Anmeldenummer: 90250281.4

(51) Int. Cl.5: **B22D 11/22**, G01M 3/04

(22) Anmeldetag: 13.11.90

Die Bezeichnung der Erfindung wurde geändert (Richtlinien für die Prüfung im EPA, A-III, 7.3).

(30) Priorität: 17.11.89 DE 3938703

(43) Veröffentlichungstag der Anmeldung:
29.05.91 Patentblatt 91/22

(84) Benannte Vertragsstaaten:
AT ES FR GB IT NL

(71) Anmelder: MANNESMANN Aktiengesellschaft
Mannesmannufer 2
W-4000 Düsseldorf 1(DE)

(72) Erfinder: **Burau, Arnim, Dipl.-Ing.**
**Am Knappert 39**
**W-4100 Duisburg 29(DE)**
Erfinder: **Clasen, Klaus-Dieter, Dipl.-Ing.**
**Münchener Strasse 57a**
**W-4100 Duisburg 28(DE)**
Erfinder: **Ehrenberg, Hans-Jürgen, Dipl.-Ing.**
**Im Kleinen Winkel 28**
**W-4000 Düsseldorf 31(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) Verfahren und Vorrichtung zur Früherkennung von Wasserleckagen in Stranggiessanlagen.

(57) Die Erfindung betrifft ein Verfahren zur Früherkennung von Leckagen in wassergekühlten Strangführungseinrichtungen von Stranggießanlagen zur Herstellung von trocken vergossenen Metallen, insbesondere Stahl. Um Leckagen in den Strangführungssystemen in einem im Vergleich zu den bekannten Methoden früheren Stadium zu erkennen, ausreichend genau zu lokalisieren und Einfluß auf die Leckagemenge zu nehmen, wird vorgeschlagen, daß daß das die Strangfürhungseinrichtung umgebende Fluid abgesaugt wird, die Änderung der Feuchte des abgesaugten Fluid gemessen wird und die Meßwerte zur Aufschaltung auf das Kühlsystem der Strangführungseinrichtung verwandt werden.

Fig. 2

# VERFAHREN UND VORRICHTUNG ZUR FRÜHERKENNUNG VON LECKAGEN

Die Erfindung betrifft ein Verfahren und eine Vorrichtung zur Früherkennung von Leckagen gemäß der Oberbegriffe der Ansprüche 1 und 8.

Bei Stranggießanlagen wird der Gießstrang, der über Rollen geführt wird, von außen gekühlt. Dies geschieht durch Spritzen oder Sprühen von außen gegen den Gießstrang und/oder durch Kühlen der Stranggießrollen. Bei modernen Stahl-Stranggießanlagen werden die Stranggießrollen mittels innenfließendem Wasser gekühlt. Beim sogenannten "trockenen Gießen" wird auf jegliches Spritzwasser verzichtet.

Bei Undichtigkeiten an den Stranggießrollen führen selbst kleinste Mengen austretenden Kühlmediums, das auf den heißen Gießstrang trifft, zu Oberflächenfehlern, die nicht oder nur mit hohem Aufwand, z. B. durch Flämmen, beseitigt werden können. Die Oberflächenfehler werden dabei erst erkannt, wenn der Strang die Anlage bereits verlassen hat.

Aus EP 02 45 610 ist eine Stranggießanlage bekannt, bei der die Strangführungsgerüste eingehaust sind. Mit der Einhausung ist ein kompressor verbunden, die die eingeschlossene Luft absaugt. Die aus dieser Schrift bekannte Anlage dient vornehmlich der Verhinderung des Austritts schädlicher Abgase. Aus dieser Schrift ist kein Hinweis auf Leckagemessungen betreffend das Strangkühlsystem zu entnehmen.

Aus DE-05 37 34 182 ist ein Verfahren sowie die dazu erforderliche Vorrichtung zum Erkennen von Leckagen bekannt, bei dem die Kühlflüssigkeit als Dampf aufgefangen, einem Feuchteindikator zugeführt und registriert wird. Dieses Verfahren ist anwendbar bei mit Feuerfestmaterial zugestellten und mit Kühlflüssigkeit ausgerüsteten metallurgischen Gefäßen. Bei Leckagen dringt Wasser in die heiße Feuerfestmasse, die verdampft dabei und gelangt infolge der temperaturbedingten Volumenvergößerung in die Meßeinrichtung. Dieses Verfahren ist bei den vorliegenden, gattungsfremden Stranggießanlagen nicht anwendbar, da zum einen keine Feuerfestauskleidung Verwendung findet und zum anderen eine Volumenvergrößerung bei der Umwandlung des Kühlwassers in Dampf in der voluminösen Klimakammer keine meßbare Wirkung entfaltet.

Bekannte Mengenmessungen der Kühlflüssigkeit sind trotz hoher relativer Genauigkeit von unter ± 1,5 % bei den eingesetzten Wassermengen zur Kühlung der Stranggießrollen nicht geeignet, kleinere Leckagemengen bis hin zu einzelnen Wassertropfen zu erkennen.

Betriebsüblich ist zur prophilaktischen Kontrolle der Dichtheit der Strangführungselemente das sogenannte Abdrücken einzelner Stranggießrollen. Hierzu werden die Absperreinrichtungen des Zu- und Ablaufen geschlossen und der Druck des Kühlsystems beobachtet. Die mit dem Strang in Verbindung stehenden Stranggießßollen erhitzen sich mit der Folge, daß ein Teil des Kühlwassers verdampft und der Druck im abgesperrten System ansteigt. Das Ansteigen bzw. Nichtansteigen des Druckes ist ein Zeichen für die Dichtheit des Systems. Dieses Verfahren wird "von Hand" durch das Bedienungspersonal ausgeführt und bedeutet eine extrem hohe Belastung der einzelnen Elemente. Eine unsachgemäße oder auch eine zu häufige Anwendung dieser Meßmethode führt zu Zerstörungen von Dichtungen, Verbindungen und ggfs. auch zu Rissen im Metallmantel des Kühlmittelführungssystems, insbesondere im Bereich der Strangführungsrollen.

Die Erfindung hat sich das Ziel gesetzt, Leckagen in den Strangführungssystemen in einem im Vergleich zu den bekannten Methoden früheren Stadium zu erkennen, ausreichend genau zu lokalisieren und Einfluß auf die Leckagemenge zu nehmen.

Die Aufgabe wird gelöst durch die Merkmale in den Kennzeichen der Ansprüche 1 und 8.

Dabei wird die Stranggießführungseinrichtung mit einem Netz von Ansaugstellen zur Aufnahme des Fluids überzogen. Bereits bei kleinen Undichtigkeiten, die sich in der Regel durch Risse in der Außenhülle der Stranggießrollen äußern, spricht das Leckageerkennungssystem an und steuert unmittelbar den Kühlmittelfluß in den Stranggießrollen. Erfaßt wird die Feuchtigkeit des sich in der Nähe des Gießstranges befindenden Fluids in Form von Dampf oder als feine Tröpfchen, die mitgerissen werden, bevor sie auf den Gießstrang auftreffen können.

Undichtigkeiten außerhalb der Kontaktfläche Stranggießrolle/Gießstrang, beispielsweise an den Kupplungen der Kühlmittelzu- und -abfuhr der Stranggießrollen, sind trotz dem Wasserverlustes keine besondere Gefahr für die Gießstrangqualität. Solange die Wassermenge als praller Strahl oder dicker Tropfen an dem Gießstrang vorbei nach unten abfließt, wird auch vom vorgeschlagenen Leckageerkennungssystem keine Erhöhung der Feuchte im Fluid gemessen. Somit werden Fehlalarme vermieden.

Ein spontaner Anstieg der Feuchte löst in der entsprechenden Zone unmittelbar eine Änderung der Wasserversorgung einzelner Stranggießrollen aus. In Abhängigkeit von der Höhe und der erfaßten Zeit des Feuchtesprungs werden die Absperrelemente der Kühlmittelzu-und -abläufe angesteuert.

Dies geschieht in der Weise, daß einmal die die Stranggießrolle durchfließende Wassermenge reduziert wird und die Temperatur des Wasserauslaufs mit zur Regelung herangezogen wird. Hierbei wird bei kleinen Undichtigkeiten in der Stranggießrolle durch Rücknahme der Wassermenge und damit des Drucks keine oder kaum noch Flüssigkeit austreten, wobei die Rücknahme ihre Grenzen an der Austrittstemperatur des Kühlwassers besitzt.

Zum anderen kann ein automatisiertes Abdrükken der Stranggießrollen durchgeführt werden zur Erkennung von Undichtigkeiten der jeweiligen Rolle. Beim Auffinden der undichten Stranggießrolle kann diese gegebenenfalls komplett von der Wasserkühlung genommen werden.

Im Vergleich zu der Stranggießaustrittsgeschwindigkeit und der Zeit, die vergeht, bis auf der Oberfläche des Gießstranges Unregelmäßigkeiten erkannt werden, ist das Leckageerkennungssystem deutlich schneller.

Die Feinheit der Lokalisierung hängt von der Dichte des Fluid-Meßnetzes ab. Durch die an den Enden der Rohre zur Gasentnahme angeordneten Absaugkammern wird eine definierte und ausreichend große Menge des Fluids erfaßt. Eine an den Rohren vorgesehene Heizung stabilisiert den Aggregatzustand des Fluids. Um den apparativen Aufwand zu minimieren, ist für mehrere Gasentnahmeelemente ein Meß- und ein Regelgerät vorgesehen. Um mehrere Rohre auf ein Meß- und Regelgerät zu schalten, sind Abzweigungen vorgesehen sind, deren Abgänge ansteuerbar absperrbar sind. Durch den Anschluß der Abzweigungen an die Absaugung der Klimakammer wird gewährleistet, daß ständig ein Fluidstrom in den Gasentnahme-Rohren sich bewegt. Durch Umschalten der entsprechenden Klappen, sei es regelmäßig oder bei Bedarf, können die Feuchtewerte an den einzelnen Abzugsorten schnell und sicher erfaßt werden. Dabei bietet es sich an, im Normalfall den Hauptstrom der Klimakammer auf seinen Feuchtigkeitsgehalt hin zu überwachen.

Beispiele der Erfindung sind in den Figuren dargelegt. Dabei zeigt

Fig. 1 eine übersicht der Stranggießanlage und
Fig. 2 das Schema der Leckagemeß- und -regeleinrichtung.

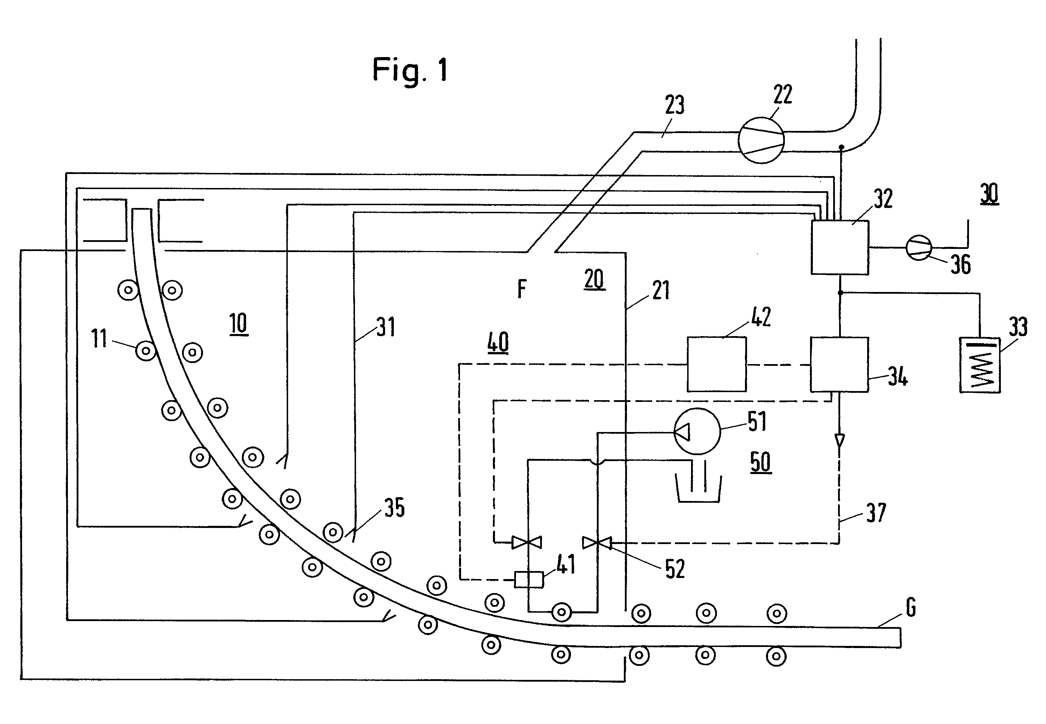

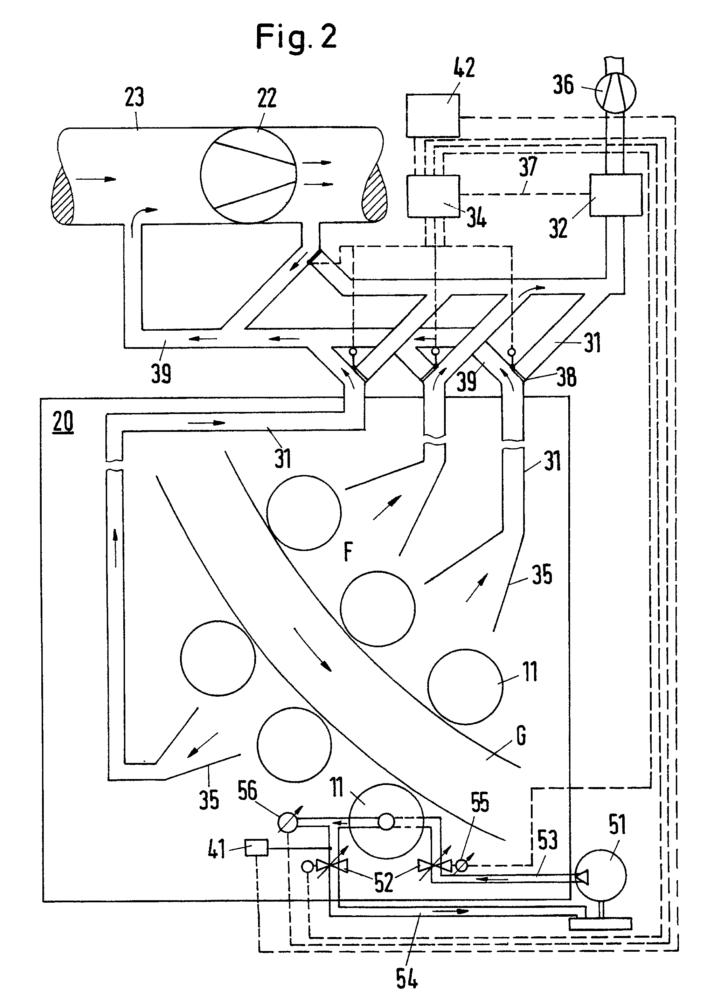

In den Figuren 1 und 2 ist die Strangführungseinrichtung 10 dargestellt, bei der der Gießstrang G von einer Reihe von Stranggießrollen 11 geführt wird.

Der überwiegende Teil der Strangführungseinrichtung befindet sich in einer Klimakammer 20, die aus einer Einhausung 21 mit einem Absaugrohr 23 besteht, in dem ein Gebläse 22 angeordnet ist.

Weiterhin sind in der Figur 1 grob vereinfacht und in der Figur 2 schematisiert auf gezeigte Feuchtemeß- und -regeleinrichtung 30 dargestellt.

Innerhalb der Klimakammer 20 sind dabei Gasentnahmeelemente 31 und außerhalb der Klimakammer Feuchtemeßgeräte 32, Anzeigegeräte 33 und Steuergeräte 34 aufgeführt. Die als Rohre ausgebildeten Gasentnahmeelemente 31 besitzen strangwärts Absaugkammern 35. In Strömungsrichtung hinter dem Feuchtemeßgerät 32 ist ein Gasfördergerät 36 angeordnet. Die von dem Gasfördergerät 36 im Bereich der Strangführungseinrichtungen oder im Absaugrohr 23 abgesaugte Menge des Fluids F wird im Feuchtemeßgerät 32 auf seinen Feuchtegehalt untersucht, entsprechend der dort gefundenen Werte wird die Kühlmittelversorgung 50 gesteuert.

Dabei weist die Kühlmittelversorgung 50 eine Pumpstation 51 auf, die das Kühlwasser über eine Kühlmittelzufuhr 53 und -abfuhr 54 zu den Stranggießrollen 11 führt. In den Kühlmittelzufuhr und -abführen 53, 54 sind durch Antriebe 55 regelbare Absperrelemente 52 vorgesehen. Darüber hinaus ist im Bereich der Stranggießrolle 11 zwischen den Absperrelemente 52 eine Druckmeßeinrichtung 56 angeordnet.

Weiterhin ist an der Kühlmittelabfuhr 54 ein Temperaturfühler 41 der Temperaturmeß- und -regeleinrichtung 40. Der Temperaturfühler 41 ist mit einem Temperaturmeßgerät 42 verbunden, das wiederum mit dem Steuergerät 34 in Verbindung steht.

In der Figur sind schematisch Abzweigungen 39 der Gasentnahmeelemente 31 dargestellt. Die Abzweigungen 39 sind zusammengeführt zu einer Sammelleitung, die in dem Absaugrohr 23 mündet. Der Normalstrang der Gasentnahmeelemente 31 ist ebenfalls zusammengeführt und mit dem Feuchtemeßgerät 32 verbunden, das wiederum an das Gasfördergerät 36 angeschlossen ist. An der Abzweigung 39 sind als Klappen ausgebildete ansteuerbare Absperrelemente vorgesehen, mit deren Hilfe jeweils die Strömungsrichtung des in Nähe des Gießstranges abgesaugten Fluids umgelenkt werden kann und zwar einmal durch das Gebläse 22 und zum anderen durch das Gasfördergerät 36.

## Ansprüche

1. Verfahren zur Früherkennung von Leckagen in wassergekühlten Strangführungseinrichtungen von Stranggießanlagen zur Herstellung von trocken vergossenen Metallen, insbesondere Stahl,
dadurch gekennzeichnet,
daß das die Strangführungseinrichtungen umgebende Fluid abgesaugt wird,
daß die Änderung der Feuchte des abgesaugten Fluids gemessen wird und
daß die Meßwerte zur Aufschaltung auf das Kühlsystem der Strangführungseinrichtung verwandt werden.

2. Verfahren zur Früherkennung van Leckagen nach Anspruch 1,
dadurch gekennzeichnet,
daß die Änderung der Feuchte des Fluids einzelnen Zonen der Strangführungseinrichtung zugeordnet wird.

3. Verfahren zur Früherkennung von Leckagen nach den Ansprüchen 1 oder 2,
dadurch gekennzeichnet,
daß in Abhängigkeit der Höhe und/oder der Geschwindigkeit der Änderung der Feuchte des Fluids eine Leckagemessung der einzelnen Kühlelemente der Strangführungseinrichtung durchgeführt wird.

4. Verfahren zur Früherkennung von Leckagen nach Anspruch 3,
dadurch gekennzeichnet,
daß die Leckagemessung der einzelnen Kühlelemente durch Ermitteln der Änderung der durchströmenden Fluidmenge durchgeführt wird.

5. Verfahren zur Früherkennung von Leckagen nach Anspruch 3,
dadurch gekennzeichnet,
daß die Leckagemessung in der Form durchgeführt wird, daß das sich in den Kühlelementen befindende Wasser eingesperrt und die Änderung des Druckes des eingesperrten Volumens ermittelt wird.

6. Verfahren zur Früherkennung von Leckagen nach Anspruch 2,
dadurch gekennzeichnet,
daß eine Wassertemperaturmessung des Wasserrücklaufes einzelner Strangführungseinrichtungen durchgeführt wird.

7. Verfahren zur Früherkennung von Leckagen nach Anspruch 6,
dadurch gekennzeichnet,
daß die Messungen der Wassertemperatur der Wasserrückläufe mit der Feuchteänderung einzelner Zonen der Strangführungseinrichtungen kombiniert werden.

8. Stranggießanlage zur Herstellung von trocken vergossenen Metallen, insbesondere Stahl, mit einer Strangführungseinrichtung, bestehend aus Kühlmittelzu- und -abfuhren aufweisenden Stranggießrollen, mit einer Klimakammer, bestehend aus einer die Strangführungseinrichtung umgebender Einhausung sowie einem in einem Absaugrohr angeordneten Gebläse zum Absaugen der Umgebungsluft und mit Gasentnahme-, Meß- und Steuereinrichtungen zur Durchführung des Verfahrens nach Anspruch 1,
dadurch gekennzeichnet,
daß innerhalb der Klimakammer (20) Gasentnahmeelemente (31) vorgesehen sind, die mit Gasförder- (36), Feuchtemeß- (32) und Steuergeräten (34) verbunden sind.

9. Stranggießanlage nach Anspruch 8,
dadurch gekennzeichnet,
daß die Gasentnahmeelemente (31) Rohre sind, an deren Mündung eine Absaugkammer (35) angeordnet ist, die eine zum Strang hin weisende offene Seite besitzt.

10. Stranggießanlage nach Anspruch 9,
dadurch gekennzeichnet,
daß die Rohre (31) beheizbar sind.

11. Stranggießanlage nach Anspruch 9,
dadurch gekennzeichnet,
daß die Absaugkammern (35) in einem Abstand von kleiner 2 m den Stranggießrollen (11) angeordnet sind.

12. Stranggießanlage nach Anspruch 10,
dadurch gekennzeichnet,
daß zwischen den Absaugkammern (33) und dem Gasfördergerät (36) Absperrelemente (38) vorgesehen sind.

13. Stranggießanlage nach Anspruch 10,
dadurch gekennzeichnet,
daß an den Rohren (31) in der Nähe der Gasfördergerätes (36) Abzweigungen (39) vorgesehen sind, die mit dem Gebläse (22) der Klimakammer (20) in Verbindung stehen.

14. Stranggießanlage nach den Ansprüchen 12 und 13,
dadurch gekennzeichnet,
daß die jeweiligen Abzweigungen (39) der Rohre (31) durch als Klappen ausgebildete Absperrelemente (38) wechselseitig verschließbar sind.

15. Stranggießanlage nach einem der oben genannten Ansprüche 8 bis 14,
dadurch gekennzeichnet,
daß ein Gasentnahmeelement (31) in dem Absaugrohr (23) in Luftströmungsrichtung hinter dem Gebläse (22) angeordnet ist.

16. Stranggießanlage nach Anspruch 8,
dadurch gekennzeichnet,
daß an der Kühlmittelabfuhr (54) der Stranggießrollen (11) Temperaturmeßfühler (41) vorgesehen sind, die mit den Steuergeräten (31), der Feuchtemeß- und Regeleinrichtung (30) verbunden sind.

17. Stranggießanlage nach Anspruch 8,
dadurch gekennzeichnet,
daß an der Kühlmittelzu- oder -abfuhr (53, 54) im Bereich zwischen den Absperrelementen (52) Druckmeßeinrichtungen (56) vorgesehen sind.

18. Stranggießanlage nach den Ansprüchen 16 oder 17,
dadurch gekennzeichent,
daß die Steuergeräte (34) mit den Antrieben (55) der Absperrelemente (52) der Kühlmittelzu- und -abfuhr (53, 54) zu den Stranggießrolen (11) verbunden sind.

Fig. 1

EP 0 429 150 A1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | STEEL TIMES INTERNATIONAL, Band 12, Nr. 2, Mai 1988, Seiten 8-12, Redhill, Surrey, GB; B. KRÜGER et al.: "Dry casting of slabs on bow-type continuous casters" * Seite 13, rechte Spalte; Seite 14, linke Spalte * – – – | 1,8 | B 22 D 11/22 G 01 M 3/04 |
| Y,D | EP-A-0 312 714 (THYSSEN AG) * Spalte 1, Zeile 42 - Spalte 2, Zeile 53 * & DE-A-3 734 182 – – – | 1,8 | |
| A | | 9-11 | |
| E | EP-A-0 359 398 (UNITED ENGINEERING STEELS) * Spalte 1, Zeile 37 - Spalte 2, Zeile 6; Figure 1,3 * – – – | 1-3 | |
| A | PATENT ABSTRACTS OF JAPAN, Band 8, Nr. 257 (P-316)[1694], 24. November 1984; & JP-A-59 126 928 (RIKEN KEIKI K.K.) 21-07-1984 * Insgesamt * – – – | 1-4 | |
| A | PATENT ABSTRACTS OF JAPAN, Band 12, Nr. 272 (M-724)[3119], 28. Juli 1988; & JP-A-63 56 343 (KAWASAKI STEEL) 10-03-1988 * Insgesamt * – – – | 6 | |
| A | PATENT ABSTRACTS OF JAPAN, Band 3, Nr. 27 (C-39), 7. März 1979; & JP-A-54 4207 (NIPPON KOKAN) 01-12-1979 * Insgesamt * – – – | 6 | |
| A | US-A-3 644 172 (D.A. CAMPBELL) – – – | | |
| D,A | EP-A-0 245 610 (INLAND STEEL) – – – | | |
| | –/– | | |

| RECHERCHIERTE SACHGEBIETE (Int. Cl.5) |
|---|
| B 22 D G 01 M F 27 D C 21 B |

Der vorliegende Recherchenbericht wurde für alle Patentansprüche erstellt

| Recherchenort | Abschlußdatum der Recherche | Prüfer |
|---|---|---|
| Den Haag | 21 Februar 91 | BOMBEKE M.J.P. |

**Europäisches Patentamt**

# EUROPÄISCHER RECHERCHENBERICHT

Nummer der Anmeldung

## EP 90 25 0281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|-----------|-------------------------------------------------------------------------------------|-------------------|------------------------------------------|
| A | CH-A-3 794 43 (GENERAL ELECTRIC)<br>– – – – – | | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---------------|------------------------------|--------|
| Den Haag | 21 Februar 91 | BOMBEKE M.J.P. |